# EUROPEAN PATENT SPECIFICATION

(11) **EP 1 395 760 B1**
(45) Date of publication and mention of the grant of the patent: **25.08.2004**
(21) Application number: 01947778.5
(22) Date of filing: 13.06.2001
(51) Int. Cl.: F16D 65/12

(54) **COMPOSITE DISK FOR A DISK BRAKE**
SCHEIBE AUS VERBUNDWERKSTOFF FÜR EINE SCHEIBENBREMSE
DISQUE COMPOSITE POUR FREIN A DISQUE

(43) Date of publication of application: 10.03.2004
(73) Proprietor: Freni Brembo S.p.A., 24035 Curno, Bergamo (IT)
(72) Inventor: CAVAGNA, Lorenzo, I-24040 Bonate Sopra (IT); OBERTI, Leone, I-24010 Lenna (IT)
(74) Representative: Crippa, Paolo Ernesto
(86) International application number: PCT/IT2001/000303
(87) International publication number: WO 2003/001076

(56) References cited:
- EP-A- 0 610 797
- DE-U- 29 906 138
- US-A- 4 662 482

## Description

The present invention relates to a composite disk-brake disk as defined in the preamble to Claim 1.

In order to reduce the thermal stresses to which conventional brake disks are subject, particularly when they are used in high-performance motorcars, so-called composite disks have been proposed. In comparison with disks of previously known type formed integrally by an annular element or braking band and by a hub or bell arranged, respectively, for providing the braking surfaces for the brake calipers and for coupling the brake disk to a wheel, the particular characteristic of composite disks is that the braking band and the bell are produced as separate parts, which may be made of different materials, and which are finally coupled by suitable connection means.

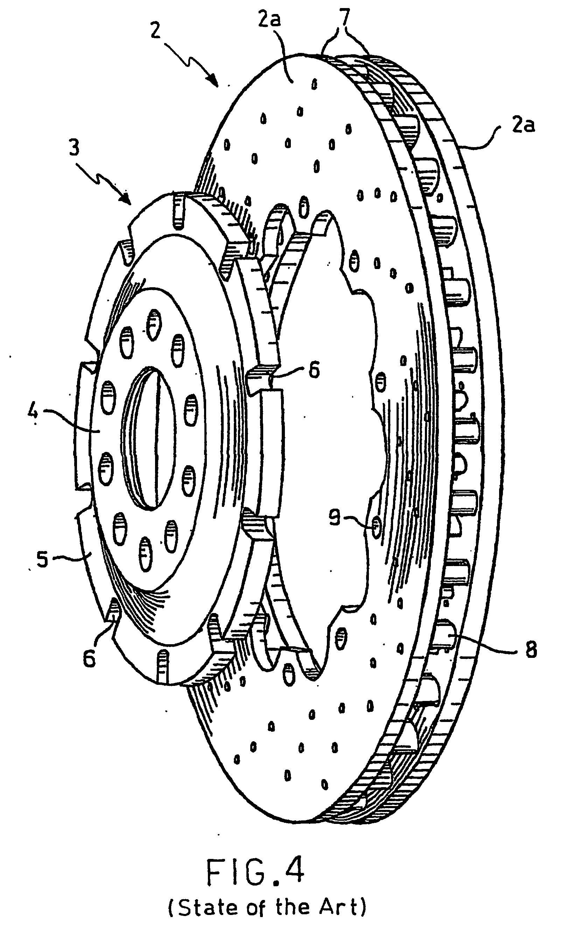

For a better understanding of the state of the art on the subject of the invention, a composite disk of known construction will be described first of all with reference to Figures 4 to 6 of the appended drawings, pointing out, in particular, the connection system between the braking band and the bell.

In the description and in the appended claims, terms such as "axial", "radial", or "tangential" are intended to refer to the condition of mounting on the motor vehicle or to the axis of the disk.

With reference to Figure 4, in which the bell and the braking band of a composite disk-brake disk of the prior art are shown as two axially separated and radially aligned parts, the disk comprises, substantially:
- a radially outer braking band 2, generally made of cast iron and having axially opposed braking surfaces 2a for cooperating, in known manner, with the calipers of the braking device (not shown), and
- a radially inner bell 3, generally made of light aluminium alloy and arranged for connection to the hub of a wheel (not shown) and for supporting the braking band 2.

The bell 3 comprises a perforated flange 4 for fixing the disk to the hub and a peripheral ring 5 formed integrally with the flange 4 and having a plurality of radial recesses 6 with parallel sides, distributed uniformly around its periphery.

The braking band 2 comprises two substantially annular plates 7 arranged parallel to one another and connected by spacer elements 8. The annular plate 7 facing the bell 3 has a plurality of through-holes 9 distributed uniformly in the vicinity of its radially inner edge at the same angular intervals as the radial recesses 6 of the bell, in order to be aligned with these recesses when the two parts 2, 3 of the disk are assembled.

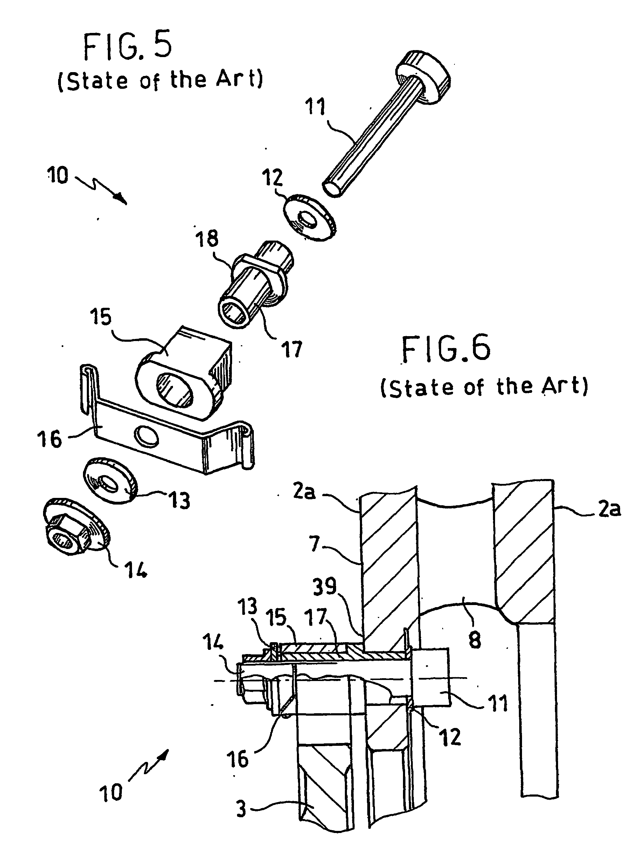

The braking band 2 and the bell 3 are joined together by connecting devices 10 such as those illustrated in Figures 5 and 6, each of which usually comprises a steel drive element arranged to be housed in a respective radial recess 6 in the periphery of the bell 3, in direct contact with the sides of the recess, and to be connected to the braking band 2 by threaded connection means.

According to the known solution shown in the above-mentioned drawings, each connecting device 10 comprises, in particular, a screw 11, a first washer 12, a second washer 13, a self-locking nut 14, a drive element 15 formed by a shaped block with four sides, that is, two pairs of parallel sides, a leaf-spring-like flat spring 16 and, finally, a bush 17 formed by a tubular element with an intermediate collar 18 having opposed flat surfaces.

The assembly of the connecting devices 10 between the braking band 2 and the bell 3 of a composite disk requires the following steps:
- inserting a bush 17 in each of the holes 9 in the annular plate 7 facing the bell, until the collar 18 is brought into abutment with the surface of the plate,
- bringing the bell 3 up to the plate 7 in a manner such that the recesses 6 in the peripheral ring 5 of the bell are aligned with the bush 17,
- fitting a drive element 15 axially on each bush 17 until it abuts the collar 18,
- inserting the screws 11 in the respective first washers 12 and in the respective bushes 17,
- arranging the flat springs 16 in a manner such that their ends are in contact with the surface of the bell 3,
- fitting the second washers 13, and
- screwing the nuts 14 onto the ends of the screws 11 until they are fully tightened.

Upon completion of the assembly, the bell 3 is spaced axially from the plate 7 of the braking band 2 by virtue of the collars 18 of the bushes 17 and is urged against the collars by the action of the flat springs 16 (Figure 6).

Whereas the tangential play in the coupling is very small, the radial depth of the recesses 6 is quite large so as to permit free radial relative movement between the band 2 and the bell 3 in order not to oppose the dimensional variations due both to the different coefficients of thermal expansion of the materials of the band and of the bell, and to the different temperatures which are reached in these two elements when the disk is heated during a braking operation.

With regard to expansions and/or movements in an axial direction, however, (for example, due to vibrations of the suspension or caused by accelerations of the vehicle axially relative to the disk), the connecting devices 10 permit sufficient axial play by virtue of the fact that the depth of the drive elements 15 is greater than the thickness of the peripheral ring 5 of the bell 3. The springs 16 serve to prevent vibrations and axial movements which would produce undesired noise.

Composite disks have been found very effective for solving the problems of thermal expansion for which they were designed. However, when a car on which these disks are mounted is travelling along roads with rough and uneven surfaces (for example, cobbles, paving etc.), particularly harmful vibrations and jolts are produced and may give rise to undesired noise or even compromise the integrity of the disks. If the connecting devices between the braking band and the bell provide for the interposition of a flat spring, the continual hammering effect due to these vibrations may cause the ends of the spring to cut into the surface of the bell against which they bear, resulting in a reduction in the resilient effect exerted by the spring and an increase in the play in the coupling between the braking band and the bell, which leads to unacceptable deterioration of the disk within a short time.

A solution is known from EP-A-0610797.

The present invention proposes to provide a composite brake disk which can overcome the above-mentioned disadvantage.

This aim is achieved by virtue of the fact that the connecting devices between the braking band and the bell comprise a plurality of inserts made of wear-resistant material, each interposed between the respective resilient element, such as a flat spring, and the bell so as to provide bearing surfaces for the spring and thus to prevent wear of the surface of the bell facing the spring and the consequent reduction of the axial load exerted by the spring, as defined in Claim 1.

A preferred but non-limiting embodiment of the invention will be described below, with reference to the appended drawings, in which:
Figure 1 is an exploded perspective view of a composite disk-brake disk according to the invention,
Figure 2 is a perspective view of the disk of Figure 1, assembled,
Figure 3 is an axial view which shows, in detail, the fitting of a connecting device between the braking band and the bell of the disk of Figure 1,
Figure 4 is an exploded perspective view of a braking band and of a bell of a composite disk-brake disk of known type,
Figure 5 is an exploded perspective view of a known connecting device usable for the coupling between a braking band and a bell such as those shown in Figure 4, and
Figure 6 is a view of the known connecting device of Figure 5, in section and in the assembled condition.

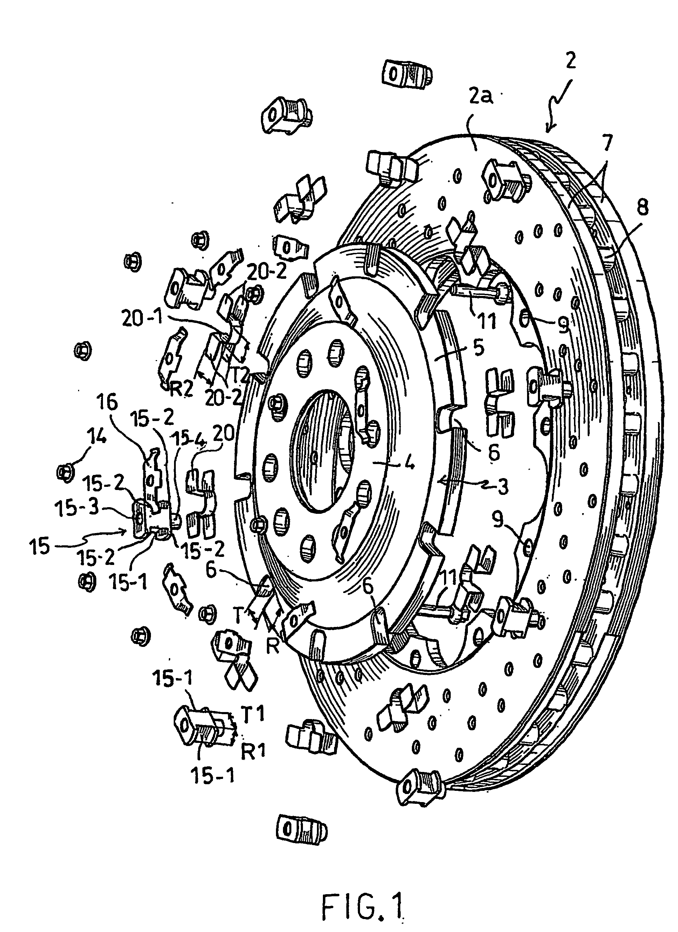

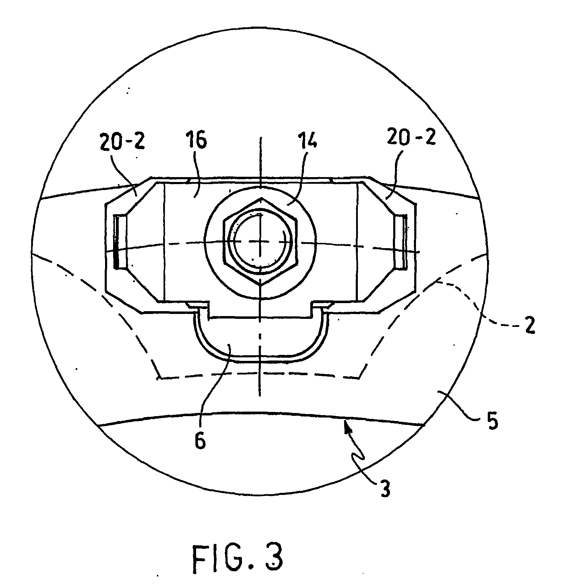

As can be seen in Figures 1 to 3, in which parts and elements identical or corresponding to those of Figures 4 to 6 (prior art) have been attributed the same reference numerals, the braking band 2 and the bell 3 of a composite disk according to the invention are coupled to one another by connecting means or connecting devices each comprising substantially a screw 11, a nut 14, a drive element 15, a flat spring 16, and an insert 20.

Each drive element 15 is constituted by a single block, preferably made of steel, of a shape and size such that it can be housed in the corresponding radial recess 6 of the bell 3 with the ability to move substantially only radially, as will be specified further below.

Each drive element 15 has two parallel opposed faces 15-1, spaced apart by a distance T1 and having a radial dimension R1. Four projections 15-2 are also provided, in the form of tabs which define the two opposed faces 15-1 axially and, when the drive element is arranged in the recess 6, engage the two opposed faces of the peripheral ring 5 of the bell 3 in the region of the four corners of the radial edges of the recess. Finally, the drive element 15 has a through-hole 15-3 through which the screw 11 can extend.

Each drive element 15 also has a cylindrical appendage 15-4, through which the hole 15-3 also extends and which can engage in the corresponding hole 9 provided in the plate 7 of the braking band 2. The axial length of the appendage is slightly less than the thickness of the plate 7 in the vicinity of the holes 9.

The insert 20 is a shaped element made of wear-resistant sheet-metal such as, for example, spring steel, and arranged to be housed in a respective recess 6, between the bell 3 and the drive elements 15. The insert comprises a substantially U-shaped central portion with two opposed parallel sides 20-1 spaced apart by a distance T2 which, in the non-assembled condition, is slightly greater than the width T of the recesses 6 (the distance between their radial sides), to enable the inserts to be held in position as a result of the resilient reaction of the sides 20-1 on the sides of the recesses. The distance T2 is only slightly greater than the distance T1 between the opposed faces 15-1 of each drive element 15, that is, the tangential play of the coupling between the recesses 6 and the drive elements 15 is very small.

The U-shaped central portion of each insert 20 has a radial dimension R2 slightly less than the radial depth R of each recess 6, so as to be housed completely inside the respective recess without projecting radially. The dimension R2, on the other hand, is sufficiently greater than the radial dimension R1 of the drive elements 15 to permit free radial movement of these elements as a result of dimensional variations of a thermal nature of the braking band 2 and of the bell 3.

According to a preferred embodiment of the invention, each insert 20 has two pairs of opposed parallel tabs 20-2 which extend outwardly, relative to the U-shaped central portion, from each of the two sides 20-1 (Figure 1). These pairs of tabs are arranged to cover the portions of the two axially opposed faces of the bell 3 around the radial edges of a recess 6 in the assembled condition, so as to provide a bearing and reaction surface of wear-resistant material for the projections 15-2 of the drive elements 15 and for the edges of the flat springs 16, thus preventing the above-mentioned phenomenon of cutting of the face of the bell facing the springs, and hence ensuring an adequate life of the disc.

The composite disk according to the invention is assembled by the following steps:
- fitting the inserts 20 on the sides of the recesses 6 of the bell 3, the inserts 20 remaining in position by resilient reaction,
- inserting the drive elements 15 in the U-shaped central portions of the inserts 20, the drive elements 15 remaining in position by form coupling,
- bringing the braking band 2 up to the bell 3 in a manner such that the cylindrical appendages 15-4 of the drive elements 15 enter the corresponding holes 9 in the bell,
- inserting the screws 11 in the holes 9 in the bell 3 and in the holes 15-3 in the drive elements 15,
- arranging the flat springs 16 in a manner such that their edges bear on the tabs 20-2 of the inserts 20, and
- screwing the nuts 14 onto the ends of the screws 11 until they are fully tightened.

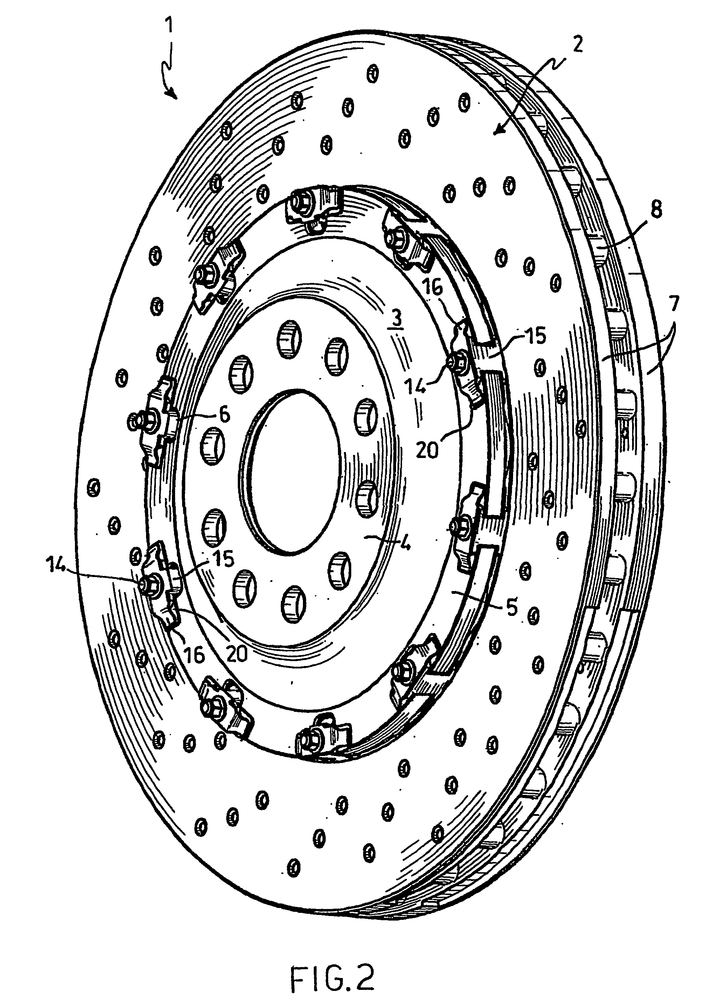

The assembled unit appears as shown in Figure 2. Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A composite disk-brake disk of the type comprising:
- an annular braking band (2),
- a bell (3) with a plurality of radial recesses (6) around its periphery, and
- connecting devices between the braking band (2) and the bell (3), comprising a plurality of drive elements (15), each fitted in a radial recess (6) of the bell (3) with the ability to move substantially only radially, and a corresponding plurality of resilient elements (16) such as flat springs, arranged to permit resilient axial play between the braking band (2) and the bell (3),
- a plurality of inserts (20) made of wear-resistant material, interposed between the plurality of flat springs (16) and the bell (3) so as to provide bearing surfaces for the springs and thus to prevent wear of the face of the bell facing the springs and the consequent reduction of the axial load exerted by the springs.
**characterized in that** each insert (20) is partially housed in a corresponding radial recess (6) of the bell (3) so as to be interposed between the bell (3) and the drive element (15) fitted in the recess (6).

2. A disk according to Claim 1 in which each insert (20) is a shaped sheet-metal element with at least two tabs (20-2) each interposed between a respective end of the flat spring (16) and the face of the bell (3) which faces the spring.

3. A disk according to Claim 2 in which each insert (20) has two pairs of parallel tabs (20-2) for covering portions of the opposed faces of the bell (3) around the radial edges of the recesses (6).

4. A disk according to any one of the preceding claims in which each insert (20) has a substantially U-shaped central portion arranged for housing a respective drive element (15) and having two opposed parallel sides (20-1) for engaging the sides of a respective radial recess (6).

5. A disk according to Claim 4 in which the U-shaped central portion of each insert (20) has a radial dimension (R2) greater than that (R1) of the drive elements (15) to permit free radial movement of the elements (15) as a result of the dimensional variations of a thermal nature of the braking band (2) and of the bell (3).

6. A disk according to any one of the preceding claims in which the inserts (20) are made of spring steel.

7. An insert (20) of wear-resistant material for a composite disk according to any one of the preceding claims.

## Patentansprüche

1. Verbundscheibenbremsenscheibe, umfassend:
- ein ringförmiges Bremsband (2),
- eine Glocke (3) mit mehreren radialen Vertiefungen (6) um ihren Umfang herum, und
- Verbindungsvorrichtungen zwischen dem Bremsband (2) und der Glocke (3), umfassend mehrere Antriebselemente (15), die jedes in einer radialen Vertiefung (6) der Glocke (3) mit der Möglichkeit eingebaut sind, sich im wesentlichen lediglich radial zu bewegen, und entsprechende mehrere elastische Elemente (16) wie etwa Federscheiben, die angeordnet sind, um ein elastisches axiales Spiel zwischen dem Bremsband (2) und der Glocke (3) zu erlauben,
- mehrere Einsätze (20), die aus abnutzungsfestem Material hergestellt sind und zwischen die mehreren Scheibenfedern (16) und die Glocke (3) eingeschoben sind, um so Lagerflächen für die Federn (3) zu schaffen und somit eine Abnutzung der Stirnfläche der Glocke, die den Federn zugewandt ist, und infolgedessen eine Verringerung der axialen Last zu verhindern, die von den Federn ausgeübt wird,
**dadurch gekennzeichnet, dass** jeder Einsatz (20) teilweise in einer entsprechenden radialen Vertiefung (6) der Glocke (3) untergebracht ist, um so zwischen der Glocke (3) und dem Antriebselement (15) eingeschoben zu sein, das in die Vertiefung (6) eingebaut ist.

2. Scheibe nach Anspruch 1, in der jeder Einsatz (20) ein geformtes Blechelement mit wenigstens zwei Bügeln (20-2) ist, die jeder zwischen ein jeweiliges Ende der Federscheibe (16) und der Stirnseite der Glocke (3) eingeschoben sind, die der Feder zugewandt ist.

3. Scheibe nach Anspruch 2, in der jeder Einsatz (20) zwei Paare paralleler Bügel (20-2) zum Abdecken von Abschnitten der gegenüberliegenden Stirnseiten der Glocke (3) um die radialen Ränder der Vertiefungen (6) aufweist.

4. Scheibe nach einem der vorstehenden Ansprüche, in der jeder Einsatz (20) einen im wesentlichen U-förmigen zentralen Abschnitt aufweist, der zur Aufnahme eines jeweiligen Antriebselements (15) angeordnet ist und der zwei einander gegenüberliegende parallele Seiten (20-1) zum Eingriff mit den Seiten einer jeweiligen Vertiefung (6) aufweist.

5. Scheibe nach Anspruch 4, in der der U-förmige zentrale Abschnitt jedes Einsatzes (20) eine radiale Abmessung (R2) aufweist, die größer als die (R1) der Antriebselemente (15) ist, um eine freie radiale Bewegung der Elemente (15) infolge der Abmessungsänderungen thermischer Natur des Bremsbandes (2) und der Glocke (3) zu erlauben.

6. Scheibe nach einem der vorstehenden Ansprüche, in der die Einsätze (20) aus Federstahl hergestellt sind.

7. Einsatz (20) aus abnutzungsfestem Material für eine Verbundscheibe nach einem der vorstehenden Ansprüche.

## Revendications

1. Disque composite pour frein à disque, du type comprenant :
- une bande de freinage (2) annulaire,
- une cloche (3), munie d'une pluralité de cavités (6) radiales autour de sa périphérie, et
- des dispositifs de liaison, entre la bande de freinage (2) et la cloche (3), comprenant une pluralité d'éléments d'entraînement (15), chacun montés dans une cavité radiale (6) de la cloche (3) avec la possibilité de se déplacer sensiblement uniquement radialement, et une pluralité correspondante d'éléments élastiques (16), tels que des ressorts plats, agencés pour permettre un jeu axial élastique entre la bande de freinage (2) et la cloche (3),
- une pluralité d'inserts (20) réalisés en matériau résistant à l'usure, interposés entre la pluralité de ressorts plats (16) et la cloche (3), pour fournir des surfaces de palier pour les ressorts et, ainsi, pour empêcher une usure de la face de la cloche placée en regard des ressorts et la réduction conséquente de la charge axiale exercée par les ressorts,
**caractérisé en ce que** chaque insert (20) est logé partiellement dans une cavité radiale (6) correspondante de la cloche (3), de manière à être interposé entre la cloche (3) et l'élément entraînement (15) monté dans la cavité (6).

2. Disque selon la revendication 1, dans lequel chaque insert (20) est un élément en feuille métallique profilé ayant au moins deux pattes (20-2), chacune interposée entre une extrémité respective du ressort plat (16) et la face de la cloche (3) tournée vers le ressort.

3. Disque selon la revendication 2, dans lequel chaque insert (20) comprend deux paires de pattes (20-2) parallèles devant couvrir des parties des faces opposées de la cloche (3), autour des bords radiaux des cavités (6).

4. Disque selon l'une quelconque des revendications précédentes, dans lequel chaque insert (20) comprend une partie centrale sensiblement en forme de U, agencée pour loger un élément d'entraînement (15) respectif et comprenant deux faces parallèles (20-1) opposées, pour la mise en contact des faces d'une cavité radiale (6) respective.

5. Disque selon la revendication 4, dans lequel la partie centrale en forme de U de chaque insert (20) présente une dimension radiale (R2) supérieure à celle (R1) des éléments d'entraînement (15) afin de permettre un déplacement radial libre des éléments (15), suite aux variations dimensionnelles, de nature thermique, de la bande de freinage (2) et de la cloche (3).

6. Disque selon l'une quelconque des revendications précédentes, dans lequel les inserts (20) sont formés d'acier à ressort.

7. Insert (20) en matériau résistant à l'usure, pour un disque composite selon l'une quelconque des revendications précédentes.
